# EUROPEAN PATENT SPECIFICATION

(11) **EP 4 322 296 B1**
(45) Date of publication and mention of the grant of the patent: **04.02.2026**
(21) Application number: 22911888.0
(22) Date of filing: 20.12.2022
(51) Int. Cl.: H01M 50/218, H01M 50/213, H01M 50/249, H01M 50/24, H01M 50/242, H01M 50/244, H01M 50/342

(54) **BATTERY MODULE AND BATTERY PACK AND VEHICLE COMPRISING THE SAME**
BATTERIEMODUL UND BATTERIEPACK SOWIE FAHRZEUG DAMIT
MODULE DE BATTERIE ET BLOC-BATTERIE, ET VÉHICULE LES COMPRENANT

(30) Priority: 20.12.2021 KR 20210183107
(43) Date of publication of application: 14.02.2024
(73) Proprietor: LG ENERGY SOLUTION, LTD., Seoul 07335 (KR)
(72) Inventor: LEE, Young-Kyu, Daejeon 34122 (KR); AN, Ji-Myong, Daejeon 34122 (KR); SON, Young-Su, Daejeon 34122 (KR)
(74) Representative: Plasseraud IP
(86) International application number: PCT/KR2022/020886
(87) International publication number: WO 2023/121255

(56) References cited:
- CN-A- 113 646 960
- KR-A- 20110 059 252
- KR-A- 20170 018 667
- KR-A- 20170 090 263
- KR-A- 20200 002 349
- US-A1- 2012 183 826
- US-A1- 2020 083 575

## Description

### TECHNICAL FIELD

The present disclosure relates to a battery module and a battery pack and a vehicle comprising the same.

The present application claims the benefit of Korean Patent Application No. 10-2021-0183107 filed on December 20, 2021 with the Korean Intellectual Property Office.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that operate by electric power. In addition to the primary advantage that it is possible to remarkably reduce the use of fossil fuels, secondary batteries do not produce by-products from the use of energy, so they are gaining attention as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack may be variously set depending on the required output voltage and/or charge/discharge capacity.

Meanwhile, a battery cell fixing structure of a battery module used in Light Electric Vehicles (LEVs) is typically formed by a combination of an upper cell frame and a lower cell frame.

However, since plastic is disposed around the upper and lower areas of the cells in the circumferential direction, the existing fixing structure has a structural problem that a glue is not properly filled on top and bottom of the cells, and in case of fire spread, a rupture occurs at the bottom of the cells.

The document US 2012/183826 Al discloses the preamble of claim 1.

### DISCLOSURE

### Technical Problem

The present disclosure is directed to enhancing fire safety of a battery module by a potting glue properly filled in battery cell bottom vulnerable to fire.

In another aspect, the present disclosure is directed to enhancing the fixation strength of battery cells in a battery module.

However, the technical problems to be solved by the present disclosure are not limited to the above-described problems, and these and other problems will be clearly understood by those skilled in the art from the following detailed description.

### Technical Solution

To solve the above-described problem, the present disclosure provides a battery module as disclosed by independent claim 1. Further embodiments are disclosed in the dependent claims.

The present disclosure further provides a battery pack including at least one battery module according to any of claims 1-10.

The present disclosure further provides a vehicle including at least one battery pack according to claim 11.

### Advantageous Effects

According to the present disclosure, when a fire occurs in any battery cell of the battery module, the potting glue disposed around the battery cell bottom prevents fire spread, thereby ensuring safety.

In another aspect, according to the present disclosure, it is possible to enhance the fixation strength of the battery cells in the battery module.

However, the effects that may be obtained through the present disclosure are not limited to the above-described effects, and these and other technical effects will be clearly understood by those skilled in the art from the following detailed description.

### DESCRIPTION OF DRAWINGS

The accompanying drawings illustrate an exemplary embodiment of the present disclosure and together with the following detailed description, serve to provide further understanding of the technical aspect of the present disclosure, and thus the present disclosure is not construed as being limited to the drawings.
FIG. 1 is a diagram illustrating a battery module according to an embodiment of the present disclosure.
FIG. 2 is an exploded perspective view of FIG. 1.
FIG. 3 is a diagram illustrating a battery cell included in the battery module of FIG. 1.
FIG. 4 is a diagram illustrating a lower part structure of a battery cell included in the battery module of FIG. 1.
FIG. 5 is a diagram illustrating a battery module according to an embodiment of the present disclosure.
FIG. 6 is a diagram illustrating a battery module according to another embodiment of the present disclosure.
FIG. 7 is a diagram illustrating a battery module according to another embodiment of the present disclosure.
FIG. 8 is a diagram illustrating a battery module according to another embodiment of the present disclosure.
FIG. 9 is a diagram illustrating a battery pack comprising the battery module of FIG. 1.
FIG. 10 is a diagram illustrating a vehicle comprising the battery pack of FIG. 9.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

Additionally, to help an understanding of the present disclosure, the accompanying drawings are not shown in true scale and may depict some exaggerated elements.

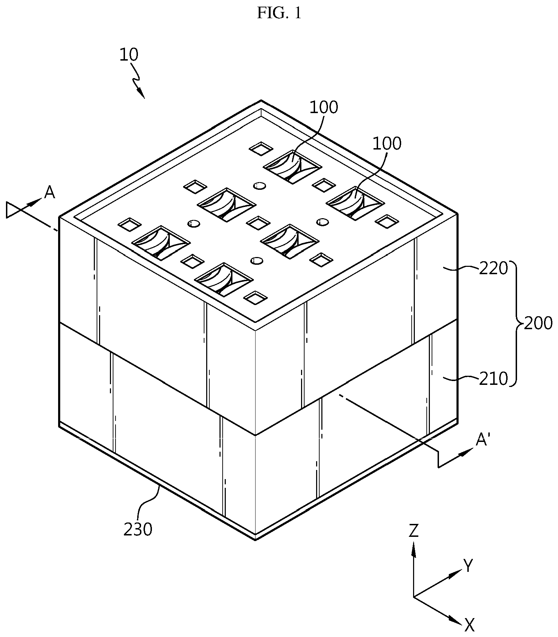

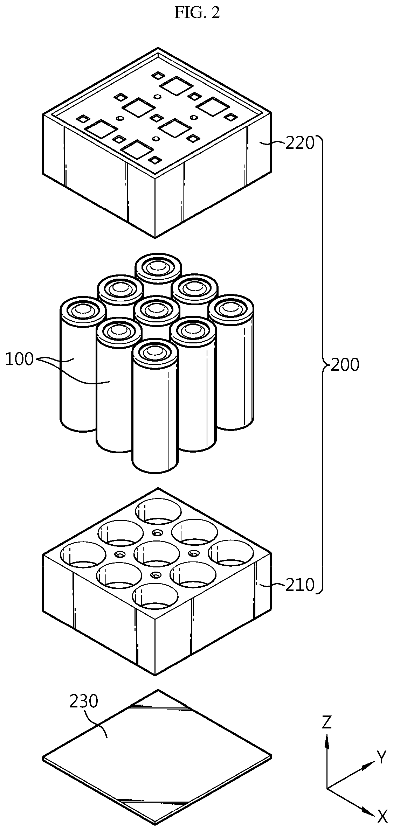

FIG. 1 is a diagram illustrating a battery module 10 according to an embodiment of the present disclosure, and FIG. 2 is an exploded perspective view of FIG. 1.

Referring to FIGS. 1 and 2, the battery module 10 according to an embodiment of the present disclosure may include a battery cell 100, a module housing 200 and a potting glue 300.

More specifically, the battery module 10 includes a plurality of battery cells 100; the module housing 200 accommodating the plurality of battery cells 100, and including a first frame 210 to cover the lower part of the battery cells 100 and a second frame 220 to cover the upper part of the battery cells 100; and the potting glue 300 which is filled in at least a part of the internal area of the first frame 210.

In general, since a vent 140 is disposed in the bottom area of the cylindrical battery cell 100, in case where a fire occurs in the battery cell 100, a rupture usually occurs in the bottom area of the battery cell 100. That is, the bottom area of the battery cell 100 is especially vulnerable to fire. Accordingly, it is necessary to enhance the safety especially at the bottom area of the battery cell 100. In relation to this, in the present disclosure, the potting glue 300 fills the internal area of the first frame 210 that covers the lower part of the battery cell 100 where the vent 140 is disposed, in order to enhance the safety of the battery cell 100, especially the bottom area of the battery cell 100.

Meanwhile, the potting glue 300 may include a silicone material. The potting glue 300 may include a flame retardant material to partially reduce the weight and suppress combustion. The potting glue 300 may include a phase change material (PCM) to improve the cooling performance.

As the potting glue 300 includes the above-described material, it is possible to suppress the spread of fire and/or explosion in the battery module 10 of the present disclosure. Additionally, it is possible to suppress additional combustion when a fire occurs in the battery module 10. Further, it is possible to improve the cooling performance of the battery module 10.

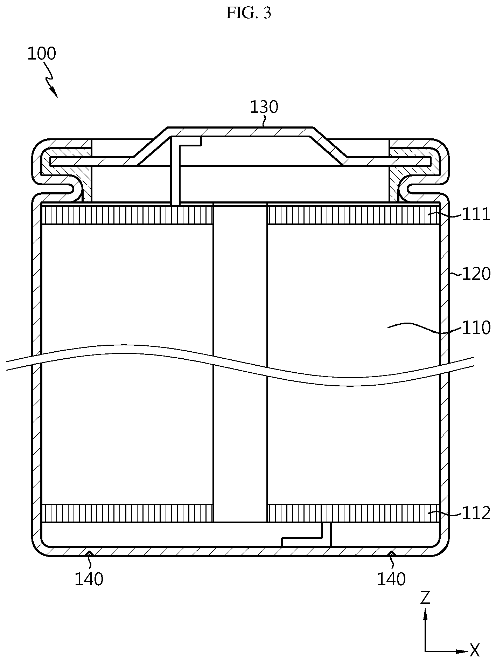

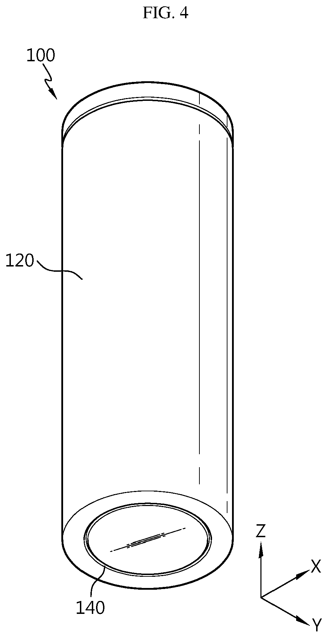

FIG. 3 is a diagram illustrating the battery cell 100 included in the battery module 10 of FIG. 1, and FIG. 4 is a diagram illustrating the lower part structure of the battery cell 100 included in the battery module 10 of FIG. 1.

The battery cell 100 may be a secondary battery, and may be, for example, a cylindrical battery cell 100. However, the type of the battery cell 100 is not limited thereto, and any other type of battery cell, such as, for example, a pouch type cell or a prismatic cell may be used in the battery module 10 of the present disclosure. The following description is made, taking the cylindrical battery cell 100 as an example of the battery cell 100 as shown in FIGS. 3 and 4.

Referring to FIGS. 3 and 4, the cylindrical battery cell 100 according to an embodiment of the present disclosure may include an electrode assembly 110, a battery can 120 and a top cap 130.

Referring to FIGS. 3 and 4, the electrode assembly 110 includes a first electrode plate having a first polarity, a second electrode plate having a second polarity and a separator between the first electrode plate and the second electrode plate. The electrode assembly 110 may have a jelly-roll shape. That is, the electrode assembly 110 may be formed by winding a stack around a winding center, the stack formed by stacking the first electrode plate, the separator and the second electrode plate at least once in a sequential order. In this case, the separator may be disposed on the outer circumferential surface of the electrode assembly 110 for insulation from the battery can 120. The first electrode plate is a positive or negative electrode plate, and the second electrode plate corresponds to an electrode plate having the opposite polarity to the first electrode plate.

Referring to FIGS. 3 and 4, the battery can 120 is a cylindrical container having an opening on top, and is made of a metal having conductive properties. The battery can 120 accommodates the electrode assembly 110 through the top opening, together with an electrolyte.

The battery can 120 is electrically connected to a second electrode tab 112 of the electrode assembly 110. Accordingly, the battery can 120 has the same polarity as the second electrode tab 112. That is, the battery can 120 may act as a second electrode terminal of the cylindrical battery cell 100.

The top cap 130 is a component made of a metal having conductive properties, and covers the top opening of the battery can 120. The top cap 130 is electrically connected to a first electrode tab 111 of the electrode assembly 110 and electrically insulated from the battery can 120. Accordingly, the top cap 130 may act as a first electrode terminal of the cylindrical battery cell 100.

Referring to FIGS. 3 and 4, the battery cell 100 may include the vent 140 that is configured to be more structurally vulnerable than the surrounding area so that the vent 140 easily ruptures when the internal pressure is applied to the battery cell 100. The vent 140 may be disposed in the bottom area of the battery cell 100. The vent 140 corresponds to an area having a smaller thickness than the surrounding area in the lower surface of the battery can 120. The vent 140 is configured to be more structurally vulnerable than the surrounding area. Accordingly, when the internal pressure rises above a predetermined level due to a fault in the cylindrical battery cell 100, the vent 140 ruptures to vent gas generated in the battery can 120.

Although FIG. 4 shows the vent 140 continuously formed in a circular pattern on the lower surface of the battery can 120, the present disclosure is not limited thereto. The vent 140 may be discontinuously formed in a circular pattern on the lower surface of the battery can 120, and may be formed in a straight line pattern or any other pattern.

Since the vent 140 is disposed in the bottom area of the battery cell 100, in case where a fire occurs in the battery cell 100, a rupture usually occurs in the bottom area of the battery cell 100. That is, the bottom area of the battery cell 100 is especially vulnerable to fire. Accordingly, it is necessary to enhance the safety especially at the bottom area of the battery cell 100. In relation to this, in the present disclosure, the potting glue 300 fills the internal area of the first frame 210 that covers the lower part of the battery cell 100 where the vent 140 is disposed, in order to enhance the safety of the battery cell 100, especially, the bottom area.

Referring back to FIGS. 1 and 2, the module housing 200 includes the first frame 210 to cover the lower part of the battery cell 100 and the second frame 220 to cover the upper part of the battery cell 100.

The module housing 200 may further include a lower plate 230 below the first frame 210. In this instance, the lower plate 230 may be integrally formed with the first frame 210 and may be a part of the first frame 210. Alternatively, as shown in FIGS. 1 and 2, the lower plate 230 and the first frame 210 are respective components and they may be coupled to each other.

The module housing 200 accommodates the plurality of battery cells 100. The module housing 200 may include, for example, plastics. However, the material for the module housing 200 is not limited thereto, and the module housing 200 may include any other material having no electrical conductivity.

Referring to FIGS. 1 and 2, the first frame 210 includes at least one first rib 211 around the outer circumferential surface of the battery cell 100. More specifically, the first rib 211 is disposed around parts of the outer circumferential surface of the battery cell 100. For example, referring to FIGS. 1 and 2, when the battery cell 100 of the present disclosure is the cylindrical battery cell 100, the first rib 211 is disposed around the cylindrical battery cell 100 in the circumferential direction. By this structure, the first rib 211 disposed around each battery cell 100 may secure the battery cells 100 in position. Further, it is possible to prevent collisions between the battery cells 100.

Referring to FIGS. 1 and 2, preferably, the first rib 211 of the first frame 210 may be disposed around the central area of the battery cell 100 in a heightwise direction (parallel to the Z axis). The first rib 211 structure of the present disclosure may improve the fixation strength of the battery cell 100 at the central area of the battery cell 100. Additionally, by this structure, a first accommodation space S1 which is hollow may be present below the first rib 211. Here, the potting glue 300 is filled in an empty space except a space occupied by the battery cells 100 in the first accommodation space S1.

As described above, since the vent 140 is present in the lower area of the battery cell 100 of the present disclosure, it is necessary to enhance safety by preventing fire spread especially at the lower area of the battery cell 100. By the first rib 211 structure of the present disclosure, the first rib 211 may secure the battery cell 100 at the central area of the battery cell 100, thereby increasing the fixation strength of the battery cell 100, and the potting glue 300 covers the lower area of the battery cell 100, thereby preventing fire spread in the battery cell 100. Accordingly, it is possible to prevent radiant heat transmission to the adjacent battery cell 100 in case where a fire occurred in any battery cell 100. That is, when the potting glue 300 is filled in the first accommodation space S1, heat generated from the battery cell 100 in which the fire occurred may propagate to the adjacent battery cell 100 through the potting glue 300. Accordingly, the adjacent battery cell 100 receives less heat than the radiant heat. Accordingly, it is possible to confine the fire to the battery cell 100 and prevent the fire spread to the adjacent battery cell 100. Further, in case where the fire causes the battery cell 100 to explode, the potting glue 300 may prevent the pressure and flames generated by the explosion from spreading to the adjacent battery cell 100. Accordingly, it is possible to suppress the explosion.

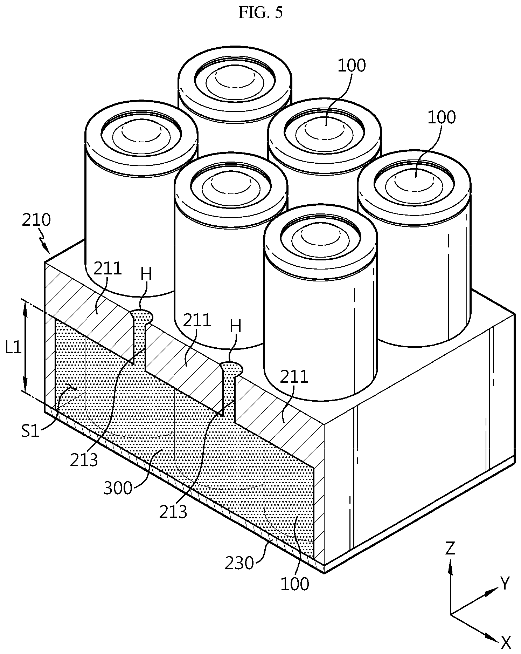

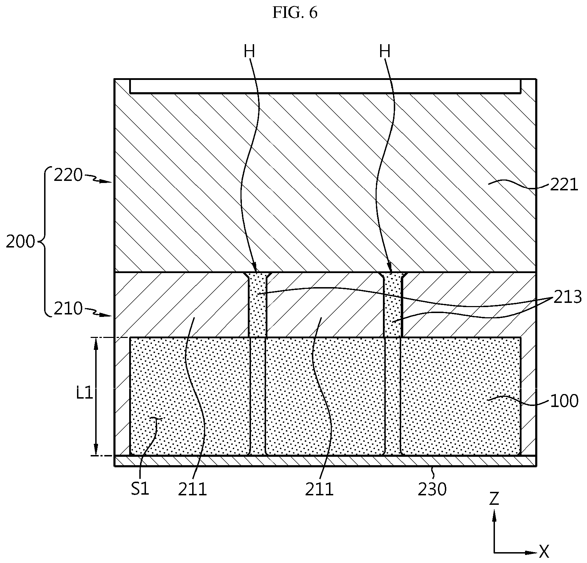

FIG. 5 is a diagram illustrating the battery module 10 according to an embodiment of the present disclosure, and FIG. 6 is a diagram illustrating the battery module 10 according to another embodiment of the present disclosure.

FIG. 5 shows the first frame 210 and the battery cell 100, and for convenience of description, the illustration of the second frame 220 is omitted.

Referring to FIGS. 1 and 5, a heightwise length L1 of the first accommodation space S1 may be about 20 to 40% of the total heightwise length of the battery cell 100. More preferably, the heightwise length L1 of the first accommodation space S1 may be about 28 to 30 % of the total heightwise length of the battery cell 100.

When the heightwise length L1 of the first accommodation space S1 is less than about 20% of the total heightwise length of the battery cell 100, the amount of the potting glue 300 filled is too low, resulting in a decline in fire spread prevention effect. On the contrary, when the heightwise length L1 of the first accommodation space S1 is more than about 40% of the total heightwise length of the battery cell 100, the amount of the potting glue 300 is too high, resulting in increased manufacturing cost. Additionally, when the amount of the potting glue 300 is too high, the curing time increases, resulting in low efficiency of the manufacturing process. Accordingly, the heightwise length L1 of the first accommodation space S1 is preferably about 20 to 40% of the total heightwise length of the battery cell 100, and more preferably about 28 to 30%.

Referring to FIGS. 1 and 5, at least one of the first frame 210 and the second frame 220 may have at least one injection hole H in the upper surface to inject the potting glue 300.

For example, referring to FIG. 5, it can be seen that of the second frame 220 that covers the lower part of the battery cell 100 has the injection hole H in the upper surface to inject the potting glue 300. In this case, the plurality of battery cells 100 may be inserted into the first frame 210, and then the potting glue 300 may be injected through the injection hole H present in the upper surface of the first frame 210. Subsequently, the battery module 10 may be completed by assembling the second frame 220. By this structure, the potting glue 300 may be selectively injected into only the lower area of the battery cell 100, not the upper area.

Referring to FIG. 5, the first rib 211 may include a plurality of first ribs 211 arranged in a direction (parallel to the XY plane) perpendicular to the heightwise direction (parallel to the Z axis) of the battery cell 100. That is, the plurality of first ribs 211 may be arranged in a horizontal direction. Referring to FIG. 1, the plurality of first ribs 211 arranged in the horizontal direction may be respectively disposed around the plurality of battery cells 100 received in the battery module 10.

Here, a first passage 213 which is hollow may be present between the first rib 211 and its adjacent first rib 211. The first passage 213 may be connected to the injection hole H. Accordingly, the potting glue 300 injected through the injection hole H may move through the first passage 213.

Preferably, the first passage 213 may be connected to the first accommodation space S1 which is hollow. Accordingly, the potting glue 300 injected through the injection hole H may reach the first accommodation space S1 through the first passage 213. As a result, the potting glue 300 may be filled in the empty space except the space occupied by the battery cells 100 in the first accommodation space S1. Accordingly, the potting glue 300 covers the lower area of the battery cell 100, thereby preventing fire spread.

Additionally, by the structure of the first frame 210, the potting glue 300 may be selectively injected into only the lower area of the battery cell 100, not the upper area. Accordingly, it is possible to apply the minimal amount of potting glue 300 necessary to prevent fire spread.

Additionally, by the above-described structure, the first frame 210 itself may be configured to inject the potting glue 300 without the help of the second frame 220, and thus it is possible to remarkably reduce the structural limitation of the second frame 220. For example, as shown in FIG. 6, the second frame 220 may not have a component for injecting the potting glue 300. That is, in the embodiment of FIG. 6, the second frame 220 may not have the rib or the injection hole H. In this case, the plurality of battery cells 100 may be inserted into the first frame 210, the potting glue 300 may be injected through the injection hole H present in the upper surface of the first frame 210, and the second frame 220 may be assembled, completing the battery module 10.

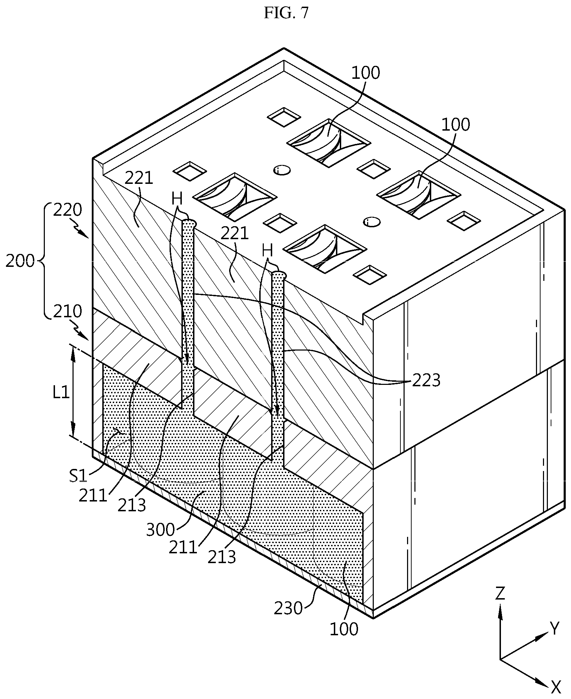

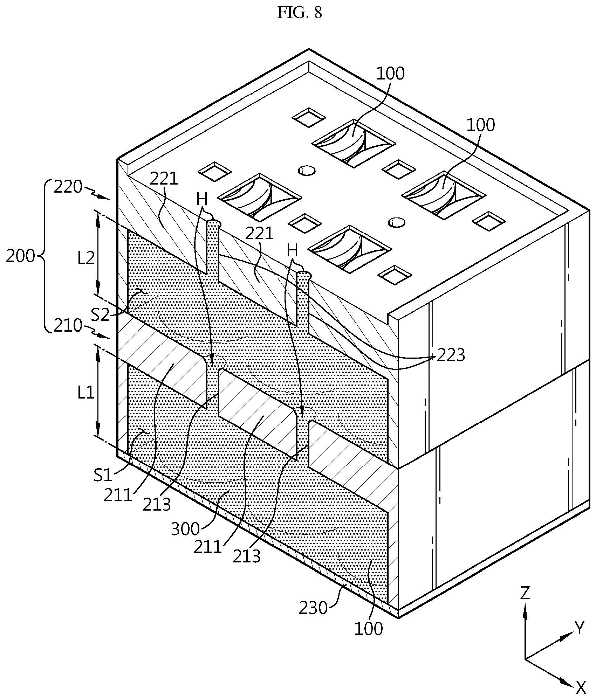

Alternatively, in another embodiment, the second frame 220 shown in FIGS. 7 or 8 as described below may be applied. That is, by the first frame 210 structure of the present disclosure, it is possible to improve the structural flexibility of the second frame 220.

FIG. 7 is a diagram illustrating the battery module 10 according to another embodiment of the present disclosure.

The module housing 200 according to this embodiment is similar to the module housing 200 of the previous embodiment, and the redundant descriptions of the components that are substantially identical or similar to the previous embodiment are omitted and the following description is made based on difference(s) between this embodiment and the previous embodiment.

Referring to FIGS. 1 and 7, the second frame 220 that covers the upper part of the battery cell 100 may have the injection hole H in the upper surface to inject the potting glue 300. In this case, since the upper surface of the second frame 220 is the upper surface of the battery module 10, the potting glue 300 may be injected through the injection hole H present in the upper surface of the battery module 10.

By this structure, there is no need to inject the potting glue 300 in the process of manufacturing the battery module 10, and the potting glue 300 may be injected after the assembly of the battery module 10 is completed. Accordingly, it is possible to the manufacturing efficiency and flexibility.

Referring to FIG. 7, the second frame 220 may include at least one second rib 221 around the outer circumferential surface of the battery cell 100. More specifically, the second rib 221 may be disposed around parts of the outer circumferential surface of the battery cell 100. For example, referring to FIG. 7, when the battery cell 100 of the present disclosure is the cylindrical battery cell 100, the second rib 221 may be disposed around the cylindrical battery cell 100 in the circumferential direction. By this structure, the second rib 221 disposed around each battery cell 100 may secure the battery cells 100 in position.

Referring to FIG. 7, a plurality of second ribs 221 may be provided which are arranged in a direction (parallel to the XY plane) perpendicular to the heightwise direction (parallel to the Z axis) of the battery cell 100. That is, the plurality of second ribs 221 may be arranged in the horizontal direction. Referring to FIG. 7, the plurality of second ribs 221 arranged in the horizontal direction may be respectively disposed around the plurality of battery cells 100 received in the battery module 10.

Here, a second passage 223 which is hollow may be present between the second rib 221 and its adjacent second rib 221. The second passage 223 may be connected to the injection hole H present in the upper surface of the second frame 220. Accordingly, the potting glue 300 injected through the injection hole H present in the upper surface of the second frame 220 may move through the second passage 223.

Preferably, the second passage 223 may be connected to the injection hole H present in the upper surface of the first frame 210. Accordingly, the potting glue 300 injected through the injection hole H present in the upper surface of the second frame 220 may reach the injection hole H present in the upper surface of the first frame 210 through the second passage 223. Further, the potting glue 300 injected through the injection hole H present in the upper surface of the first frame 210 may reach the first accommodation space S1 through the first passage 213. As a result, the potting glue 300 may be filled in the empty space except the space occupied by the battery cells 100 in the first accommodation space S1. Accordingly, the potting glue 300 covers the lower area of the battery cell 100, and thus it is possible to prevent fire spread, thereby improving the safety of the battery module 10.

FIG. 8 is a diagram illustrating the battery module 10 according to another embodiment of the present disclosure.

The module housing 200 according to this embodiment is similar to the module housing 200 of the previous embodiment, and the redundant descriptions of the components that are substantially identical or similar to the previous embodiment are omitted and the following description is made based on difference(s) between this embodiment and the previous embodiment.

Referring to FIG. 8, the second rib 221 of the second frame 220 may be disposed around the top area of the battery cell 100 in the heightwise direction (parallel to the Z axis).

By the second rib 221 structure of the present disclosure as described above, it is possible to improve the fixation strength of the battery cell 100 at the top area of the battery cells 100. Moreover, since the first rib 211 already secures the central area of the battery cell 100, by the structure of the second rib 221 as described above, it is possible to further improve the fixation strength of the battery cell 100.

In another aspect of the present disclosure, referring to FIG. 8, a second accommodation space S2 which is hollow may be present below the second rib 221. Here, preferably, an empty space except a space occupied by the battery cells 100 in the second accommodation space S2 may be filled with the potting glue 300.

By this structure, the potting glue 300 may be additionally disposed at approximately central area of the battery cell 100. Accordingly, it is possible to prevent fire spread in case where a rupture and/or a fire occurs at the side of the battery cell 100, especially, the central area on the side. That is, it is possible to further improve the safety of the battery module 10. Further, it is possible to increase the cooling efficiency on the side of the battery cell 100.

In another embodiment, the second rib 221 may be disposed around an area other than the top of the battery cell 100 in the heightwise direction (parallel to the Z axis). For example, the second rib 221 may be disposed in the central area of the second frame 220 in the heightwise direction. In this case, the hollow second accommodation space S2 may be disposed in each of the upper area of the second rib 221 and the lower area of the second rib 221. Alternatively, for example, the second rib 221 may be disposed in the bottom area of the second frame 220 in the heightwise direction (parallel to the Z axis). In this case, the hollow second accommodation space S2 may be disposed in the upper area of the second rib 221. As described above, the position of the second rib 221 in the heightwise direction may change.

In contrast, the position of the first rib 211 in the heightwise direction (parallel to the Z axis) is less likely to change than the position of the second rib 221 in the heightwise direction (parallel to the Z axis). For example, preferably, the first rib 211 is not disposed in the bottom area of the first frame 210. In case where the first rib 211 is disposed in the bottom area of the first frame 210, the first accommodation space S1 may be disposed in the top area of the first frame 210, and thus the potting glue 300 cannot directly cover the bottom area of the battery cell 100. Eventually, the safety of the battery cell 100 degrades. Accordingly, the first rib 211 is preferably disposed in an area except the bottom area of the first frame 210, i.e., the central area or the top area.

In another aspect of the present disclosure, although not shown in the drawings, a bonding agent for the battery cell 100 may be applied to the lower plate 230 of the present disclosure. By this structure, it is possible to restrict the battery cell 100 from moving in the heightwise direction. For example, a vertical allowance or gap may be formed in the battery module 10. Even in this case, since the battery cell 100 may be secured to the bottom of the first frame 210, it is possible to prevent the battery cell 100 from unnecessarily moving in the battery module 10. Further, in the event that the first frame 210 or the second frame 220 has a lost or broken area of a sufficient size for the battery cell 100 to escape, the bonding agent may prevent the battery cell 100 from slipping out.

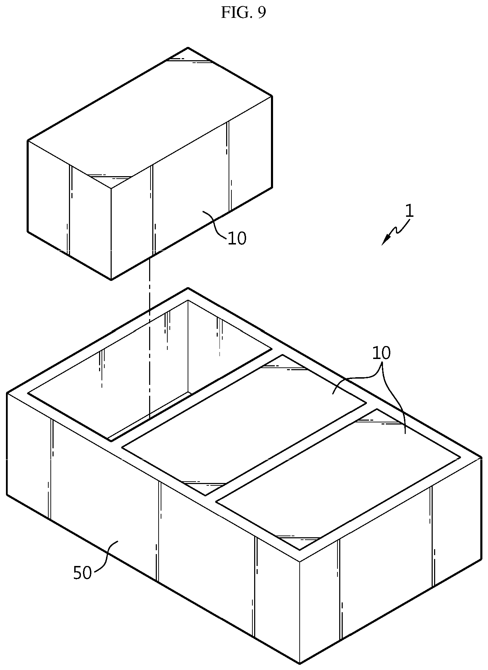

FIG. 9 is a diagram illustrating a battery pack comprising the battery module of FIG. 1.

Referring to FIG. 9, the battery pack 1 according to the present disclosure may include at least one battery module 10 according to the present disclosure. Additionally, the battery pack 1 according to the present disclosure may include a pack case 50 accommodating the at least one battery module 10. In addition to the battery module 10, the battery pack 1 may further include any other components, for example, the components of the battery pack 1 known at the time that the patent application was filed, such as a BMS, a pack case, a relay, a current sensor or the like.

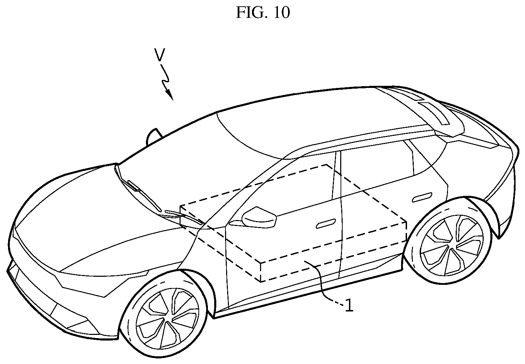

FIG. 10 is a diagram illustrating a vehicle comprising the battery pack of FIG. 9.

Referring to FIG. 10, the vehicle V according to the present disclosure may include at least one battery pack 1 according to the present disclosure.

According to the various embodiments as described above, the potting glue 300 disposed around the bottom of the battery cells 100 prevents fire spread in the event of a fire in any battery cell 100 of the battery module 10, thereby ensuring the safety of the battery module 10. Additionally, it is possible to enhance the fixation strength of the battery cells 100 in the battery module 10.

Accordingly, according to the various embodiments as described above, there may be provided the battery module 10 with improved safety, and the battery pack 1 and the vehicle V comprising the same.

The terms indicating directions such as upper and lower are used herein for convenience only, and it should be obvious to those skilled in the art that these terms may change depending on the position of the stated element or an observer.

While the present disclosure has been hereinabove described with regard to a limited number of embodiments and drawings, the present disclosure is not limited thereto, and it is apparent that a variety of changes and modifications may be made by those skilled in the art within the technical aspect of the present disclosure and the appended claims and their equivalents.

### [Reference Signs]

| | | | |
|---|---|---|---|
| V: | Vehicle | 200: | Module housing |
| 1: | Battery pack | 210: | First frame |
| 10: | Battery module | 211: | First rib |
| 50: | Pack case | 213: | First passage |
| 100: | Battery cell | 220: | Second frame |
| 110: | Electrode assembly | 221: | Second rib |
| 111: | First electrode tab | 213: | Second passage |
| 112: | Second electrode tab | 230: | Lower plate |
| 120: | Battery can | H: | Injection hole |
| 130: | Top cap | S1: | First accommodation space |
| 140: | Vent | S2: | Second accommodation space |
| 300: | Potting glue | | |

## Claims

1. A battery module (10), comprising:
a plurality of battery cells (100);
a module housing (200) accommodating the plurality of battery cells (100), the module housing (200) including a first frame (210)
to cover a lower part of the battery cells (100) and a second frame (220) to cover an upper part of the battery cells (100); and
a potting glue (300) filled in at least a part of an internal area of the first frame (210);
wherein the first frame (210) includes at least one first rib (211) around an outer circumferential surface of the battery cell (100);
wherein a first accommodation space (S1) which is hollow is present below the first rib (211);
and
**characterized in that**
the potting glue (300) is filled in an empty space except a space occupied by the battery cells in the first accommodation space (S1).

2. The battery module (10) according to claim 1, wherein the battery cell (100) includes a vent (140) which is configured to be more structurally vulnerable than a surrounding area to easily rupture when an internal pressure is applied to the battery cell (100), and
wherein the vent (140) is disposed in a bottom area of the battery cell (100).

3. The battery module (10) according to claim 1, wherein the first rib (211) of the first frame (210) is disposed around a central area of the battery cell (100) in a heightwise direction.

4. The battery module (10) according to claim 1, wherein a heightwise length of the first accommodation space (S1) is 20 to 40% of a total heightwise length of the battery cell (100).

5. The battery module (10) according to claim 1, wherein the potting glue (300) includes a silicone material.

6. The battery module (10) according to claim 1, wherein at least one of the first frame (210) and the second frame (220) has at least one injection hole (H) in an upper surface to inject the potting glue (300).

7. The battery module (10) according to claim 1, wherein a plurality of first ribs (211) are provided which are arranged in a direction perpendicular to a heightwise direction of the battery cell (100), and
wherein a first passage (213) which is hollow is present between the first rib (211) and its adjacent first rib (211).

8. The battery module (10) according to claim 1, wherein the second frame (220) includes at least one second rib (221) around an outer circumferential surface of the battery cell (100).

9. The battery module (10) according to claim 8, wherein a plurality of second ribs (221) are provided in a direction perpendicular to a heightwise direction of the battery cell (100), and
wherein a second passage (223) which is hollow is present between the second rib (221) and its adjacent second rib (221).

10. The battery module (10) according to claim 8, wherein a second accommodation space (S2) which is hollow is present below the second rib (221).

11. A battery pack (1) comprising at least one battery module (10) according to any one of claims 1 to 10.

12. A vehicle (V) comprising at least one battery pack (1) according to claim 11.

## Patentansprüche

1. Batteriemodul (10), umfassend:
eine Mehrzahl von Batteriezellen (100);
ein Modulgehäuse (200), welches die Mehrzahl von Batteriezellen (100) aufnimmt, wobei das Modulgehäuse (200) einen ersten Rahmen (210), um einen unteren Teil der Batteriezellen (100) zu bedecken, und einen zweiten Rahmen (220) umfasst, um einen oberen Teil der Batteriezellen (100) zu bedecken; und
einen Vergussklebstoff (300), welcher in wenigstens einen Teil eines internen Bereichs des ersten Rahmens (210) gefüllt ist;
wobei der erste Rahmen (210) wenigstens eine erste Rippe (211) um eine äußere Umfangsfläche der Batteriezelle (100) herum umfasst;
wobei ein erster Aufnahmeraum (S1), welcher hohl ist, unter der ersten Rippe (211) vorliegt; und
**dadurch gekennzeichnet, dass** der Vergussklebstoff (300) in einem freien Raum mit Ausnahme eines Raums gefüllt ist, welcher durch die Batteriezellen in dem ersten Aufnahmeraum (S1) eingenommen wird.

2. Batteriemodul (10) nach Anspruch 1, wobei die Batteriezelle (100) eine Entlüftung (140) umfasst, welche dazu eingerichtet ist, strukturell schwächer als ein Umgebungsbereich zu sein, um in einfacher Weise zu reißen, wenn ein interner Druck auf die Batteriezelle (100) ausgeübt wird, und
wobei die Entlüftung (140) in einem unteren Bereich der Batteriezelle (100) angeordnet ist.

3. Batteriemodul (10) nach Anspruch 1, wobei die erste Rippe (211) des ersten Rahmens (210) in einer Höhenrichtung um einen zentralen Bereich der Batteriezelle (100) herum angeordnet ist.

4. Batteriemodul (10) nach Anspruch 1, wobei eine Höhenlänge des ersten Aufnahmeraums (S1) 20 bis 40 % einer gesamten Höhenlänge der Batteriezelle (100) ist.

5. Batteriemodul (10) nach Anspruch 1, wobei der Vergussklebstoff (300) ein Silikonmaterial umfasst.

6. Batteriemodul (10) nach Anspruch 1, wobei wenigstens einer aus dem ersten Rahmen (210) und dem zweiten Rahmen (220) in einer oberen Fläche wenigstens ein Injektionsloch (H) aufweist, um den Vergussklebstoff (300) zu injizieren.

7. Batteriemodul (10) nach Anspruch 1, wobei eine Mehrzahl von ersten Rippen (211) bereitgestellt ist, welche in einer Richtung angeordnet sind, welche senkrecht zu einer Höhenrichtung der Batteriezelle (100) ist, und
wobei ein erster Durchgang (213), welcher hohl ist, zwischen der ersten Rippe (211) und deren benachbarter ersten Rippe (211) vorliegt.

8. Batteriemodul (10) nach Anspruch 1, wobei der zweite Rahmen (220) wenigstens eine zweite Rippe (221) um eine äußere Umfangsfläche der Batteriezelle (100) herum umfasst.

9. Batteriemodul (10) nach Anspruch 8, wobei eine Mehrzahl von zweiten Rippen (221) in einer Richtung bereitgestellt ist, welche senkrecht zu einer Höhenrichtung der Batteriezelle (100) ist, und
wobei ein zweiter Durchgang (223), welcher hohl ist, zwischen der zweiten Rippe (221) und deren benachbarter zweiten Rippe (221) vorliegt.

10. Batteriemodul (10) nach Anspruch 8, wobei ein zweiter Aufnahmeraum (S2), welcher hohl ist, unter der zweiten Rippe (221) vorliegt.

11. Batteriepack (1), umfassend wenigstens ein Batteriemodul (10) nach einem der Ansprüche 1 bis 10.

12. Fahrzeug (V), umfassend wenigstens einen Batteriepack (1) nach Anspruch 11.

## Revendications

1. Module de batterie (10), comprenant :
une pluralité d'éléments de batterie (100) ;
un boîtier de module (200) recevant la pluralité d'éléments de batterie (100), le boîtier de module (200) comprenant un premier cadre (210) pour couvrir une partie inférieure des éléments de batterie (100) et un second cadre (220) pour couvrir une partie supérieure des éléments de batterie (100) ; et
une colle d'enrobage (300) remplissant au moins une partie d'une zone interne du premier cadre (210) ;
dans lequel le premier cadre (210) comprend au moins une première nervure (211) autour d'une surface circonférentielle extérieure de l'élément de batterie (100) ;
dans lequel un premier espace de réception (S1) qui est creux est présent sous la première nervure (211) ; et
**caractérisé en ce que**
la colle d'enrobage (300) remplit un espace vide à l'exception d'un espace occupé par les éléments de batterie dans le premier espace de réception (S1).

2. Module de batterie (10) selon la revendication 1, dans lequel l'élément de batterie (100) comprend un évent (140) qui est configuré pour être structurellement plus vulnérable qu'une zone environnante pour se rompre facilement lorsqu'une pression interne est appliquée à l'élément de batterie (100), et
dans lequel l'évent (140) est disposé dans une zone de dessous de l'élément de batterie (100).

3. Module de batterie (10) selon la revendication 1, dans lequel la première nervure (211) du premier cadre (210) est disposée autour d'une zone centrale de l'élément de batterie (100) dans une direction dans le sens de la hauteur.

4. Module de batterie (10) selon la revendication 1, dans lequel une longueur dans le sens de la hauteur du premier espace de réception (S1) est égale à 20 à 40 % d'une longueur totale dans le sens de la hauteur de l'élément de batterie (100).

5. Module de batterie (10) selon la revendication 1, dans lequel la colle d'enrobage (300) comprend un matériau de silicone.

6. Module de batterie (10) selon la revendication 1, dans lequel au moins un parmi le premier cadre (210) et le second cadre (220) a au moins un trou d'injection (H) dans une surface supérieure pour injecter la colle d'enrobage (300).

7. Module de batterie (10) selon la revendication 1, dans lequel une pluralité de premières nervures (211) sont fournies qui sont agencées dans une direction perpendiculaire à une direction dans le sens de la hauteur de l'élément de batterie (100), et
dans lequel un premier passage (213) qui est creux est présent entre la première nervure (211) et sa première nervure (211) adjacente.

8. Module de batterie (10) selon la revendication 1, dans lequel le second cadre (220) comprend au moins une seconde nervure (221) autour d'une surface circonférentielle extérieure de l'élément de batterie (100).

9. Module de batterie (10) selon la revendication 8, dans lequel une pluralité de secondes nervures (221) sont fournies dans une direction perpendiculaire à une direction dans le sens de la hauteur de l'élément de batterie (100), et
dans lequel un second passage (223) qui est creux est présent entre la seconde nervure (221) et sa seconde nervure (221) adjacente.

10. Module de batterie (10) selon la revendication 8, dans lequel un second espace de réception (S2) qui est creux est présent sous la seconde nervure (221).

11. Bloc-batterie (1) comprenant au moins un module de batterie (10) selon l'une quelconque des revendications 1 à 10.

12. Véhicule (V) comprenant au moins un bloc-batterie (1) selon la revendication 11.
